# EUROPEAN PATENT APPLICATION

(11) **EP 3 514 039 A1**
(43) Date of publication of application: **24.07.2019**
(21) Application number: 17850710.9
(22) Date of filing: 31.08.2017
(51) Int. Cl.: B62B 9/12, B62B 7/08

(54) **STROLLER**

(30) Priority: 16.09.2016 JP 2016181621
(71) Applicant: Car Mate Mfg. Co., Ltd., Toshima-ku Tokyo 171-0051 (JP)
(72) Inventor: HIRANO, Masahiro, Tokyo 171-0051 (JP); NAKATA, Ryo, Tokyo 171-0051 (JP)
(74) Representative: Beetz & Partner mbB
(86) International application number: PCT/JP2017/031463
(87) International publication number: WO 2018/051807

(57) **Abstract**

[Problem] An object of the present invention is to provide a foldable stroller which is capable of accommodating both infants and toddlers.

[Solution] A stroller 10 of the present invention includes: a stroller body 20 which can be folded from an unfolded state to a folded state; and a toddler seat 40 which is attached integrally to the stroller body 20, and which can be folded between a back section 44 and a seat section 42 along with a folding operation of the stroller body 20, wherein the stroller body 20 is provided with attachment parts 60 which allow an infant seat 50 to be detachably attached to the stroller body 20 at a position above the toddler seat 40.

## Description

### TECHNICAL FIELD

The present invention relates to a stroller for carrying infants/toddlers, and particularly to a stroller which can be folded from an unfolded state to a folded state.

### BACKGROUND ART

Conventionally, strollers for moving an infant/toddler in which the infant/toddler is seated or lying down are widely used.

In particular, foldable strollers can be easily folded by operating a button near the grip of a handle, and thus are easy to use during movement and during storage.

PTL1 discloses a stroller which can be folded from an unfolded state to a folded state, wherein the stroller can be switched between an opposite surface pushing position or a back surface pushing position by swinging the handle.

PTL2 discloses a stroller which includes a stroller body and a seat that is detachably attached to the stroller body, wherein the stroller body is configured to be foldable.

### CITATION LIST

### PATENT LITERATURE

PTL 1: JP2011-148449A
PTL 2: JP5442729B2

### SUMMARY OF INVENTION

### TECHNICAL PROBLEM

In general, during the infant stage, the position at which the seat is attached to the stroller body is preferably high in consideration of reducing the effects of radiant heat from the road surface and dust as much as possible and the convenience of loading and unloading an infant. On the other hand, during the toddler stage, the attachment position of the seat is preferably lowered compared to that during the infant stage from the viewpoint of maneuverability, traveling stability, and risks of falling out considering the weight of the infant.

However, in the stroller disclosed in PTL1, the seat is fixed to the stroller body, and the stroller is configured to accommodate from infants to toddlers with a single seat. Further, the position at which the seat is attached cannot be adjusted and the seat is not detachable. Therefore, it would be difficult to say that this stroller is suitable for both infants and toddlers.

In the stroller disclosed in PTL2, the seat is configured to be detachable from the stroller body, but the height position of the seat cannot be adjusted. Further, the seat must be exchanged in order to change from an infant seat to a toddler seat, and this operation is troublesome and may lead to malfunctions such as incorrect attachment. In addition, the seat must be removed when folding the stroller body, and thus the stroller is not easy to use. Therefore, once again, it would be difficult to say that this stroller is suitable for both infants and toddlers.

In consideration of the above-described problems in the prior art, an object of the present invention is to provide a foldable stroller which is capable of accommodating both infants and toddlers.

### SOLUTION TO PROBLEM

As a first means for solving the above-described problems, the present invention provides a stroller including: a stroller body which can be folded from an unfolded state to a folded state; and a toddler seat which is attached integrally to the stroller body, and which can be folded between a back section and a seat section along with a folding operation of the stroller body, wherein the stroller body is provided with attachment parts which allow an infant seat to be detachably attached to the stroller body at a position above the toddler seat.

According to the first means configured as described above, since the infant seat can be detachably attached at a position above the toddler seat which is fixed to the stroller body, during the infant stage, the infant seat can be used at a position higher than the toddler seat. Further, during the toddler stage, the toddler seat can be used by merely removing the infant seat. Therefore, the stroller is easy to use, and the attachment mistakes and complicated exchange operations found in the prior art are eliminated.

As a second means for solving the above-described problems, the present invention provides the stroller of the first means, wherein the infant seat can be folded along with the folding operation of the stroller body.

According to the second means configured as described above, the stroller can be easily folded even when using the infant seat without having to remove the infant seat.

As a third means for solving the above-described problems, the present invention provides the stroller of the first or second means, wherein a guard member can be detachably attached to the attachment parts during use of the toddler seat.

According to the third means configured as described above, the attachment location of the guard member which is necessary when using the toddler seat is the same as the attachment location of the infant seat, and thus the apparatus configuration can be simplified and the weight of the stroller can be reduced.

### EFFECTS OF INVENTION

According to the stroller of the present invention, since the infant seat can be detachably attached at a position above the toddler seat which is fixed to the stroller body, during the toddler stage, the toddler seat can be used by merely removing the infant seat. Therefore, the attachment mistakes and complicated exchange operations found in the prior art are eliminated.

### BRIEF DESCRIPTION OF DRAWINGS

FIG. 1 is a schematic view illustrating the step-by-step transition from the unfolded state to the folded state of the stroller of the present invention.
FIG. 2 is a side view illustrating the step-by-step transition from the unfolded state to the folded state of the stroller of the present invention.
FIG. 3 is an explanatory view of the attachment of an infant seat to a stroller body.
FIG. 4 is an explanatory view of a folding lock part.
FIG. 5 is an explanatory view of the infant seat.
FIG. 6 is an explanatory view of an attachment part and a removal part.
FIG. 7 is an explanatory view of the stroller equipped with a toddler seat.
FIG. 8 is an explanatory view of the reclining of the toddler seat.

### DESCRIPTION OF EMBODIMENTS

Embodiments of the stroller of the present invention will now be explained in detail below referring to the attached drawings.

### [Stroller 10]

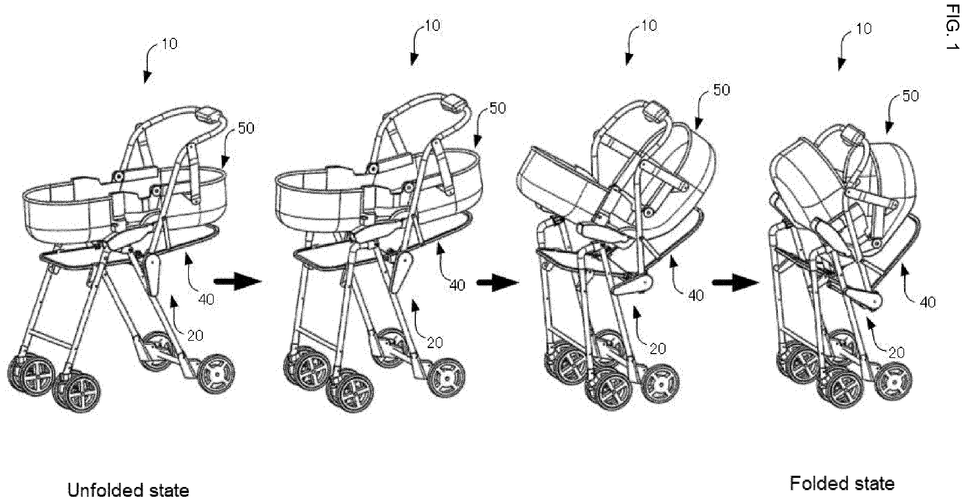

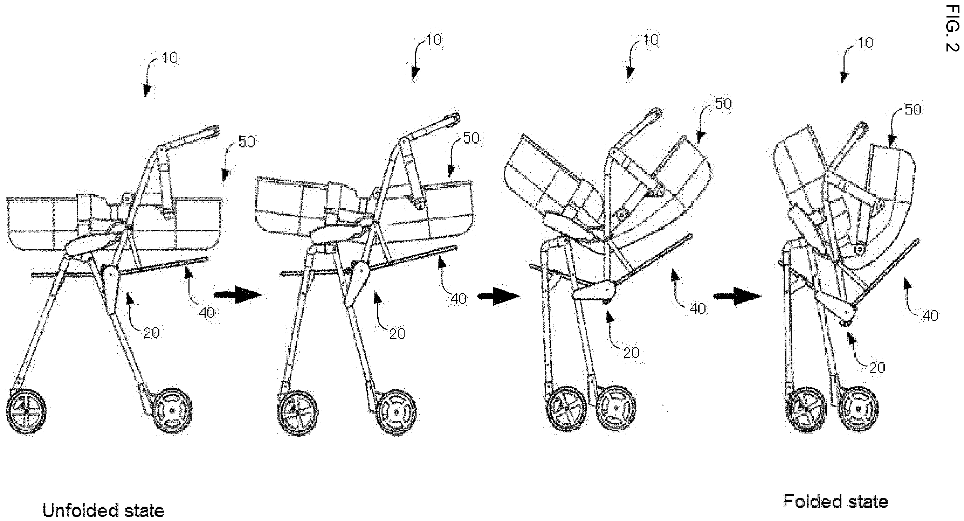

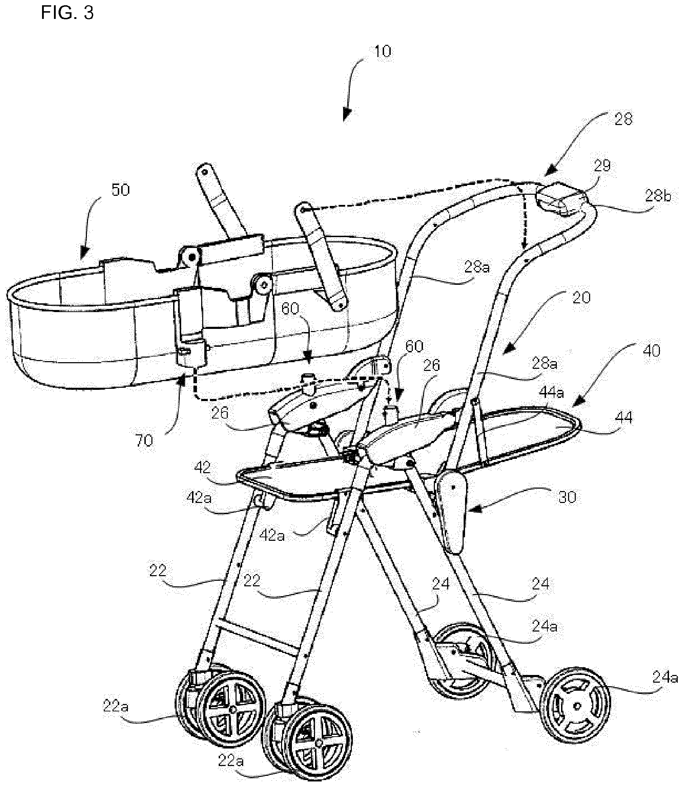

FIG. 1 is a schematic view illustrating the step-by-step transition from the unfolded state to the folded state of the stroller of the present invention. FIG. 2 is a side view illustrating the step-by-step transition from the unfolded state to the folded state of the stroller of the present invention. FIG. 3 is an explanatory view of the attachment of the infant seat to a stroller body. The basic configuration of a stroller 10 of the present invention mainly includes a stroller body 20, a toddler seat 40, and an infant seat 50.

The front, back, left, and right as used in the present embodiment are the same as the front, back, left, and right using a toddler as a reference when the stroller 10 is unfolded and the toddler is seated in the toddler seat 40.

### [Stroller Body 20]

The stroller body 20 includes left-right pairs of front legs 22, back legs 24, and arm rests 26, and also includes a handle 28.

Each front leg 22 includes a front wheel 22a at the bottom end thereof, and the top end of the front leg 22 is curved toward the back leg 24 side and is pivotably connected near the top end of the back leg 24.

Each back leg 24 includes a back wheel 24a at the bottom end thereof, and the top end of the back leg 24 is pivotably connected to the arm rest 26.

Each arm rest 26 is a member that covers the top ends of the front leg 22 and the back leg 24, and the back end of the arm rest 26 is pivotably connected to the handle 28. The top surface side of the arm rest 26 is formed in a gently curved shape, and is provided with an attachment part 60 (to be explained later) above the location at which the back leg 24 is connected.

The handle 28 is composed of a pair of linear sections 28a and a middle section 28b that connects the linear sections 28a, and the handle 28 is formed in substantially a U-shape. The bottom ends of the handle 28 on the linear section 28a side are pivotably connected to folding lock parts 30 (to be explained later). Further, the middle section 28b side at the top end of the handle 28 is curved toward the back when viewed from the side surface.

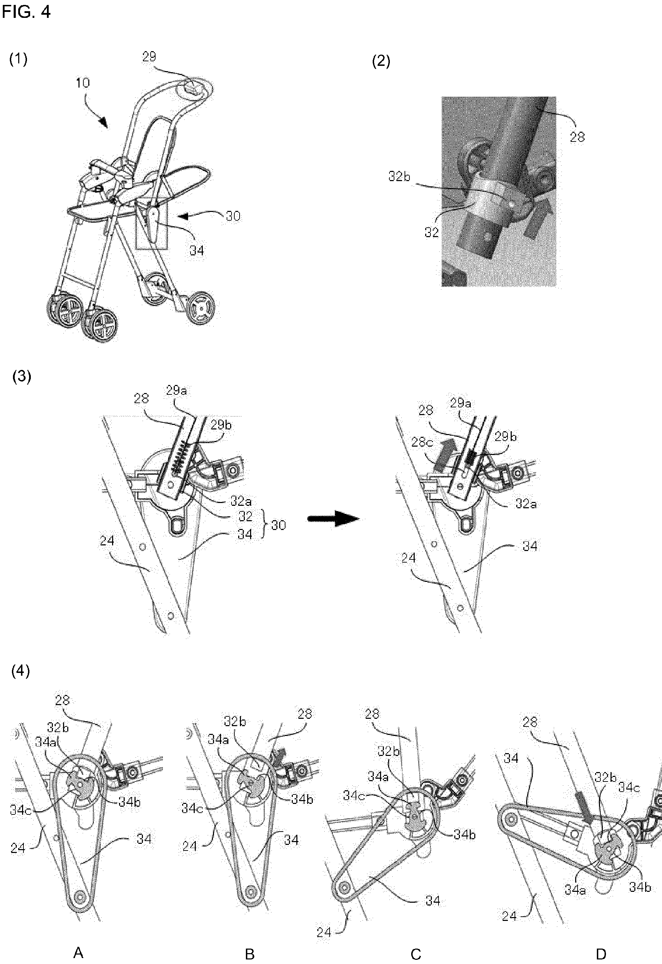

FIG. 4 is an explanatory view of the folding lock part. (1) is a schematic view of the stroller, (2) is a schematic view of the lock part, (3) is an explanatory view of a wire operation, and (4) is an explanatory view of the folding and the lock position. As illustrated in the drawings, the basic configuration of each folding lock part 30 mainly includes a lock part 32 and a link part 34.

The lock part 32 is a cylindrical member that is provided to the bottom end side of the handle 28 and covers the bottom end side of the handle 28. An engagement part 32a that extends in the diameter direction is provided to the top end side of the lock part 32. A short protruding part 32b is provided to the cylindrical surface of the lock part 32. An elongated hole 28c into which the engagement part 32a of the lock part 32 fits is provided to the bottom end side of the handle 28. The elongated hole 28c is formed along the lengthwise direction of the handle 28. The engagement part 32a connects to the bottom end of a wire 29a connected to a folding operation part 29 which is provided to the middle section of the handle. A coil spring 29b is provided at the location where the engagement part 32a and the wire 29a connect to each other. The coil spring 29b biases the lock part 32 so as to push the lock part 32 toward the bottom end of the handle 28.

The top end side of the link part 34 is pivotably connected to the bottom end of the handle 28 when the stroller 10 is in the unfolded state, and the bottom end side of the link part 34 is pivotably connected to the back leg 24. A stopper 34a is provided at the location where the link part 34 connects to the bottom end of the handle 28. The stopper 34a is provided with a recessed part which engages with the protruding part 32b of the lock part 32. The recessed part consists of a first recessed part 34b into which the protruding part 32b fits in the unfolded state of the stroller 10, and a second recessed part 34c into which the protruding part 32b fits in the folded state of the stroller 10.

### [Infant Seat 50]

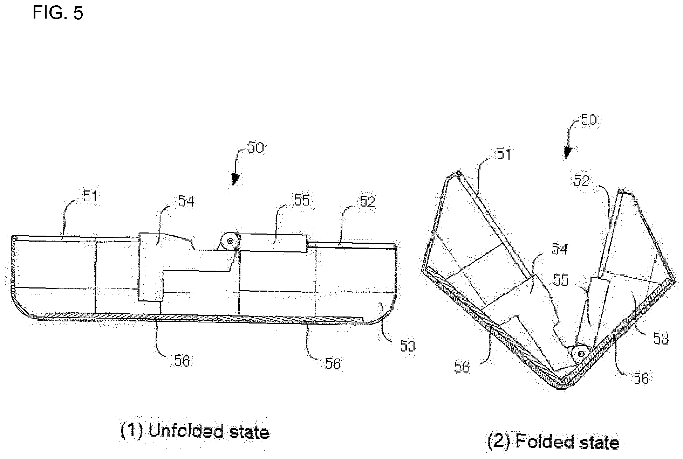

FIG. 5 is an explanatory view of the infant seat. (1) is a side surface cross-section view in the unfolded state, and (2) is a side surface cross-section view in the folded state. The infant seat 50 includes first and second U-shaped frames 51, 52, a fabric 53, first and second support members 54, 55, and a base board 56, and the infant seat 50 functions mainly as a bed for an infant.

The first and second U-shaped frames 51, 52 are connected along the circumferential edges of a top surface opening of the fabric 53 which is formed in the shape of a container which can accommodate an infant.

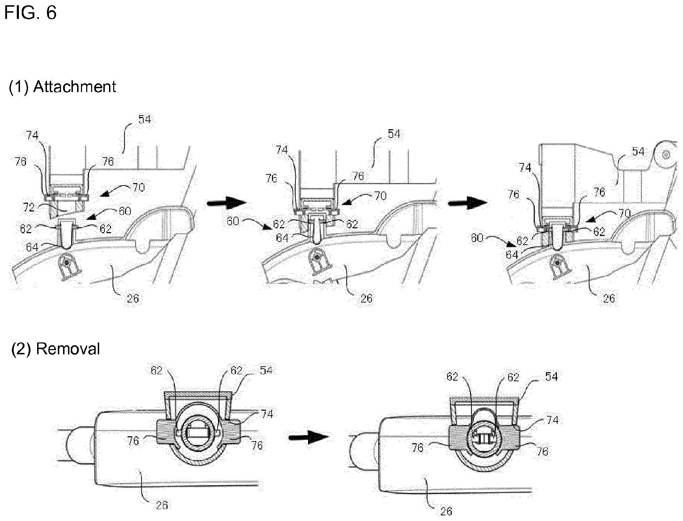

FIG. 6 is an explanatory view of an attachment part and a removal part. As illustrated, each attachment part 60 is a cylindrical member that protrudes upwards from the top surface of the arm rest 26. In the attachment part 60, holes are formed at the top end side in the horizontal direction (diameter direction), and a pair of protruding parts 62 that extend to the outside from the holes are provided. A U-shaped plate spring 64 is attached to a hollow inner part of the attachment part 60. The U-shaped plate spring 64 is connected at both end sides of the linear section thereof to the hollow side end parts of the pair of protruding parts 62. In the attachment part 60 configured as described above, the protruding parts 62 are biased by the U-shaped plate spring 64 so as to protrude to the outside from the holes.

A removal part 70 is provided to the bottom end of the first support member 54 of the infant seat 50. The removal part 70 includes the following: a hole 72 into which the attachment part 60 fits; an opening 74 which opens in the diameter direction at a location overlapping with the protruding parts 62 when the attachment part 60 is fitted into the hole 72; and a pair of removal buttons 76 that are biased from the opening 74 toward the outside. When the removal buttons 76 are pushed toward the center of the hole 72, the removal buttons 76 abut the protruding parts 62 of the attachment part 60, and when the removal buttons 76 are pushed further, the protruding parts 62 are also pushed to the center side. In this state, the infant seat 50 can be removed from the stroller body 20 by pulling out the removal part 70.

### [Toddler Seat 40]

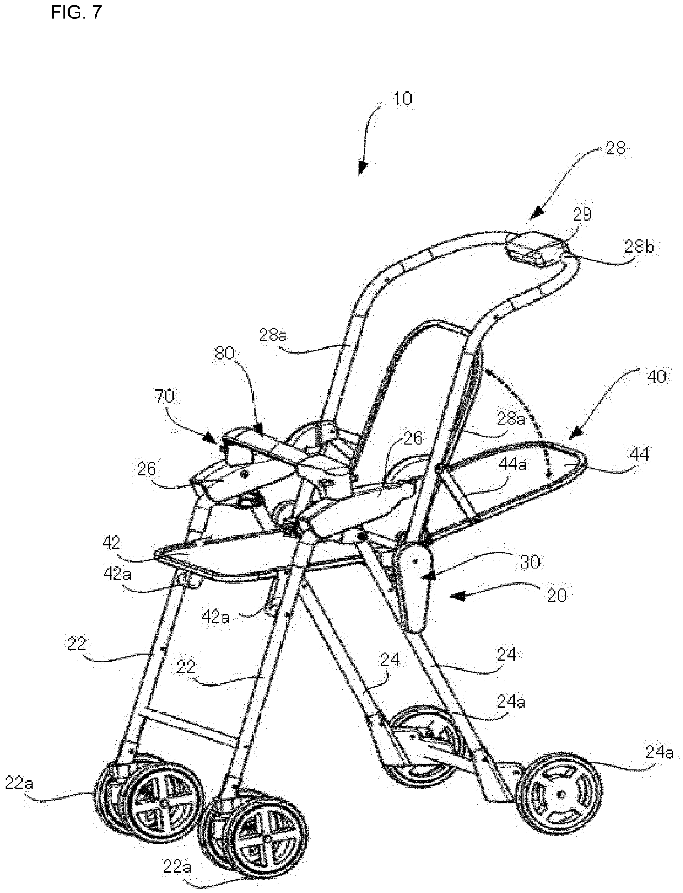

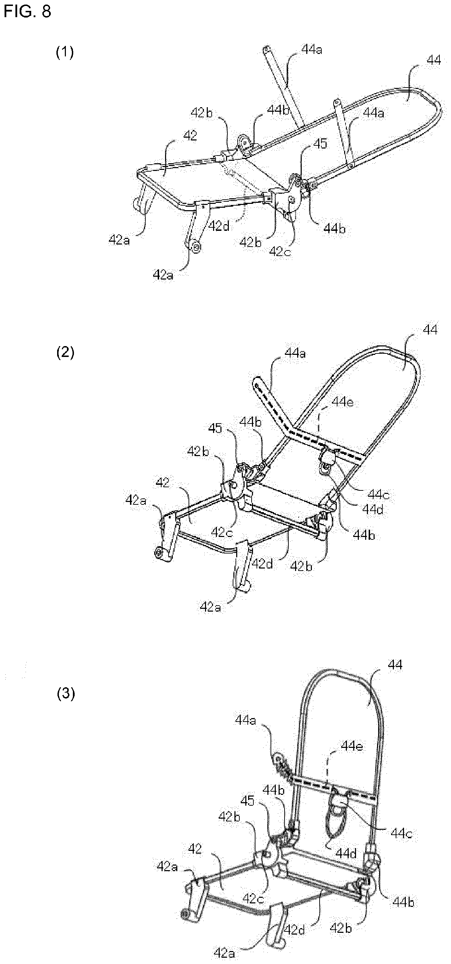

FIG. 7 is an explanatory view of the stroller equipped with a toddler seat. FIG. 8 is an explanatory view of the reclining of the toddler seat, and therein (1) is a schematic view of the flat surface side, (2) is a first schematic view of the bottom surface side, and (3) is a second schematic view of the bottom surface side. The toddler seat 40 is composed of a seat section 42 and a back section 44. Each of these sections is configured by adhering a fabric to a U-shaped frame. The toddler seat 40 has a predetermined strength and flexibility and functions mainly as a seat for toddlers.

In the seat section 42, seat section support members 42a extending downward are attached to the middle part side of the U-shape, and the seat section support members 42a are pivotably connected to the upper end sides of the front legs 22. A pair of seat section retaining parts 42b are attached to both end sides of the linear sections of the U-shape of the seat section 42. Each seat section retaining part 42b is provided with a shaft part 42c that is pivotable on the same axis as the shaft to which the bottom end of the handle 28 is connected within the link part 34. Further, a reinforcement bar 42d is attached to the bottom surface side of the seat section retaining parts 42b extending between the pair of seat section retaining parts 42b so as to increase the rigidity of the seat section 42.

In the back section 44, back section support members 44a extending upward are attached to the linear sections of the U-shape, and the back section support members 44a are pivotably connected to the linear sections 28a of the handle 28. The back section support members 44a are made of a bag-shaped fabric, and an adjustment string 44e is passed through the bag-shaped fabric. The back section support members 44a are connected so as to extend between the pair of linear sections 28a of the handle. Therein, the back section 44 is disposed between the back section support members 44a and the handle. A string fixation tool 44c is attached to the middle portion of the back section support members 44a. The adjustment string 44e is passed through the string fixation tool 44c, and the string fixation tool 44c is also provided with a reclining lever 44d.

A pair of back section retaining members 44b are attached to both end sides of the linear sections of the U-shape of the back section 44. The back section retaining members 44b are pivotably connected to the seat section retaining parts 42b via hinge parts 45.

The attachment angle of the back section 44 of the toddler seat can be adjusted to an arbitrary angle relative to the seat section 42 using the back section support members 44a. As shown in (2) of FIG. 8, when the back section 44 is to be laid down, the reclining lever 44d of the string fixation tool 44c is pulled so as to lengthen the adjustment string 44e between both ends of the back section support members 44a and the string fixation tool 44c, and thereby the back section 44 can be laid down to an arbitrary angle.

On the other hand, as shown in (3) of FIG. 8, when the back section 44 is to be raised up, the adjustment string 44e that is sticking out from the string fixation tool 44c is pulled so as to shorten the adjustment string 44e between both ends of the back section support members 44a and the string fixation tool 44c, and thereby the back section 44 can be raised up to an arbitrary angle.

A guard member 80 is a member that extends between the pair of arm rests 26, and removal parts 70 having the same configuration as those of the infant seat are provided to the bottom parts at both ends of the guard member 80. The guard member 80 configured in this way can be easily attached by fitting the removal parts 70 into the attachment parts 60 from which the infant seat 50 has been removed. Further, the guard member 80 can be easily removed from the attachment parts 60 by the button operation of the removal parts 70.

### [Operation]

The operation for folding the stroller in an unfolded state of the present invention configured as described above will now be explained.

In the stroller 10 in an unfolded state, the first recessed parts 34b of the link parts 34 and the protruding parts 32b of the lock parts 32 are engaged with each other so that a locked state in the unfolded state is maintained (refer to 4 (A) of FIG. 4).

If the operation button of the folding operation part 29 provided to the middle section 28b of the handle 28 is pushed, the wire 29a connected to the button is pulled upwards (toward the middle section 28b side).

The protruding parts 32b of the lock parts 32 that were engaged with the first recessed parts 34b of the link parts 34 are released from the first recessed parts 34b (refer to (4) B of FIG. 4).

While maintaining the operation button of the folding operation part 29 in a pushed state, the front legs 22 are pushed to the back leg 24 side or the back legs 24 are pushed to the front leg 22 side (refer to (4) C of FIG. 4).

If the handle 28 is pushed further upwards, the infant seat and the toddler seat are folded in half.

After the stroller 10 is in the folded state, if the operation button of the folding operation part 29 is released, the protruding parts 32b of the lock parts 32 engage with the second recessed parts 34c to put the stroller 10 in a locked state of the folded state by the bias of the coil spring 29b (refer to (4) D of FIG. 4). By folding the stroller 10 in this way, the stroller body 20 and the infant seat 50 and the toddler seat 40 can be integrally made compact.

The operation for unfolding the stroller in a folded state of the present invention can be realized by performing the opposite operation from that described above.

In addition, during the toddler stage, the infant seat 50 can be easily removed from the attachment parts 60 by the button operation of the removal parts 70, and by attaching the guard member 80 to the attachment parts 60, the stroller 10 can be used in a manner suitable for toddlers.

According to the stroller of the present invention, since the infant seat can be detachably attached at a position above the toddler seat which is fixed to the stroller body, during the toddler stage, the toddler seat can be used by merely removing the infant seat. Therefore, the attachment mistakes and complicated exchange operations found in the prior art are eliminated.

### INDUSTRIAL APPLICABILITY

The present invention is industrially applicable in the field of vehicles, especially strollers for infants and toddlers.

### REFERENCE SIGNS LIST

- 10...: stroller
- 20...: stroller body
- 22...: front leg
- 22a...: front wheel
- 24...: back leg
- 24a...: back wheel
- 26...: arm rest
- 28...: handle
- 29...: folding operation part
- 30...: folding lock part
- 40...: toddler seat
- 42...: seat section
- 42a...: seat section support member
- 44...: back section
- 44a...: back section support member
- 50...: infant seat
- 51...: first frame
- 52...: second frame
- 53...: fabric
- 54...: first support member
- 55...: second support member
- 56...: base board
- 60...: attachment part
- 62...: protruding part
- 64...: U-shaped plate spring
- 70...: removal part
- 80...: guard member

## Claims

1. A stroller comprising:
a stroller body which can be folded from an unfolded state to a folded state; and
a toddler seat which is attached integrally to the stroller body, and which can be folded between a back section and a seat section along with a folding operation of the stroller body,
wherein the stroller body is provided with attachment parts which allow an infant seat to be detachably attached to the stroller body at a position above the toddler seat.

2. The stroller according to claim 1, wherein the infant seat can be folded along with the folding operation of the stroller body.

3. The stroller according to claim 1 or 2, wherein a guard member can be detachably attached to the attachment parts during use of the toddler seat.
